# DEMANDE DE BREVET EUROPEEN

(11) **EP 4 651 160 A1**
(43) Date de publication de la demande: **19.11.2025**
(21) Numéro de dépôt: 25176204.3
(22) Date de dépôt: 13.05.2025
(51) Int. Cl.: H01F 3/14, H01F 27/34, H01F 30/10, H02M 3/00, B60L 53/20, H01F 27/255

(54) **TRANSFORMATEUR MONOPHASÉ POUR CHARGEUR D'UNITÉ DE STOCKAGE D'ÉNERGIE ÉLECTRIQUE DE VÉHICULE**

(30) Priorité: 16.05.2024 FR 2405048
(71) Demandeur: Valeo eAutomotive Germany GmbH, 91056 Erlangen (DE)
(72) Inventeur: SARRAFIN ARDEBILI, Farshid, 95892 Cergy Pontoise (FR); MOUSAVI SOMARIN, Hasan, 95892 Cergy Pontoise (FR); MESSI, Norbert, 95892 Cergy Pontoise (FR); BRAZ, Luiz, 95892 Cergy Pontoise (FR)
(74) Mandataire: Valeo Powertrain Systems

(57) **Abrégé**

Transformateur monophasé (15) pour convertisseur de tension (8), comprenant :
- un circuit magnétique (16),
- un enroulement primaire (17), et
- un enroulement secondaire (18),
le circuit magnétique (16) comprenant une jambe centrale (20) autour de laquelle sont successivement enroulés l'enroulement secondaire (18) et des parties successives (17a, 17b) de l'enroulement primaire (17), la jambe centrale (20) comprenant successivement le long de son axe longitudinal (X):
- une première portion (21) autour de laquelle est enroulée une première partie (17a) de l'enroulement primaire (17),
- une deuxième portion (22) autour de laquelle est enroulé l'enroulement secondaire (18), et
- une troisième portion (23) autour de laquelle est enroulée une deuxième partie (17b) de l'enroulement primaire (17),
un ou plusieurs entrefers (24) étant ménagés dans la deuxième portion (18) de la jambe centrale (20).

## Description

La présente invention concerne un transformateur monophasé pour un composant assurant l'alimentation électrique d'une unité de stockage d'énergie électrique de véhicule, ce composant étant encore appelé « chargeur » de cette d'unité de stockage d'énergie électrique. L'unité de stockage d'énergie électrique est par exemple une batterie, pouvant présenter une tension nominale supérieure à 60V, par exemple supérieure ou égale à 300V, à 400V, à 800V, voire à 1000V. Ce chargeur comprend dans un exemple connu :
- un onduleur/redresseur recevant en entrée une tension alternative d'un réseau électrique et fournissant en sortie une tension continue, et
- un convertisseur DC/DC disposé en aval de l'onduleur/redresseur et connecté à l'unité de stockage d'énergie électrique et intégrant un transformateur d'isolation qui peut être monophasé ou polyphasé.

Il existe un besoin pour améliorer encore de tels chargeurs. L'invention a pour but de répondre à ce besoin et elle y parvient, selon l'un de ses aspects, à l'aide d'un transformateur monophasé pour convertisseur de tension, comprenant :
- un circuit magnétique,
- un enroulement primaire, et
- un enroulement secondaire,
le circuit magnétique comprenant une jambe centrale autour de laquelle sont successivement enroulés l'enroulement secondaire et des parties successives de l'enroulement primaire, la jambe centrale comprenant successivement le long de son axe longitudinal :
- une première portion autour de laquelle est enroulée une première partie de l'enroulement primaire,
- une deuxième portion autour de laquelle est enroulé l'enroulement secondaire, et
- une troisième portion autour de laquelle est enroulée une deuxième partie de l'enroulement primaire, un ou plusieurs entrefers étant ménagés dans la deuxième portion de la jambe centrale.

Ce positionnement des entrefers au niveau de la deuxième portion de la jambe centrale autour de laquelle est enroulé l'enroulement secondaire permet de modifier la reluctance du circuit magnétique. Il est ainsi possible de mieux contrôler le chemin magnétique et de concentrer l'inductance de fuite sur le côté primaire du transformateur. On peut ainsi améliorer le couplage magnétique entre le primaire et le secondaire du transformateur et ainsi réduire les pertes d'énergie. Cette disposition des entrefers, de par son action sur l'inductance de fuite, permet également que cette inductance de fuite constitue l'inductance résonante. Il n'est alors plus nécessaire de prévoir un composant physique monté en série avec l'enroulement primaire du transformateur pour réaliser cette inductance résonante. Il en résulte alors un gain en poids, en encombrement, et en coût. Il en résulte également un meilleur rendement du fait que les pertes cuivre et fer associées à la présence du composant physique formant l'inductance résonante sont évitées.

Un nombre impair d'entrefers peut être ménagé dans la deuxième portion de la jambe centrale, notamment trois ou cinq entrefers.

La première partie et la deuxième partie de l'enroulement primaire peuvent être montées en série.

Chaque entrefer peut être rempli de colle, de FR4, ou être occupé par de l'air.

Chaque entrefer peut s'étendre sur la même dimension le long de l'axe longitudinal de la jambe centrale. En variante, cette dimension peut varier d'un entrefer à l'autre.

La distance le long de l'axe longitudinal de la jambe centrale séparant deux entrefers consécutifs peut être constante sur l'ensemble des entrefers ménagés dans la deuxième portion de la jambe centrale. On simplifie ainsi la fabrication des morceaux de la jambe centrale. En variante, cette distance peut varier sur l'ensemble des entrefers.

Le plan médian de l'entrefer médian au sein de la pluralité d'entrefers de la deuxième portion de la jambe centrale peut être un plan de symétrie pour la jambe centrale.

La jambe centrale peut être dépourvue d'entrefer ailleurs que dans la deuxième portion.

Dans tout ce qui précède, la jambe centrale peut présenter une section transversale circulaire ou ovale.

Dans tout ce qui précède, le circuit magnétique du transformateur peut comprendre :
- deux jambes externes entre lesquelles est disposée physiquement la jambe centrale, et
- deux culasses, chaque culasse étant disposée à une extrémité longitudinale et permettant au flux magnétique circulant dans la jambe centrale de reboucler dans les jambes externes. Le flux circulant dans la jambe centrale et rebouclant dans les jambes externes ne traverse avantageusement pas d'autres entrefers que ceux ménagés dans la deuxième portion de la jambe centrale.

Chaque culasse peut être réalisée d'une seule pièce avec une partie de la jambe centrale et de chaque jambe externe. Cette pièce peut alors avoir une forme de « E ».

Le circuit magnétique peut former une coque pour le transformateur, l'enroulement électrique étant contenu dans le circuit magnétique.

Au sein de la présente demande :
- « axial » ou « axialement » signifie « en se déplaçant le long de l'axe longitudinal de la jambe centrale », et
- « radial » ou « radialement » signifie « dans un plan perpendiculaire à l'axe longitudinal de la jambe centrale, selon un rayon par analogie avec le cas où la section transversale de la jambe centrale est circulaire ».

Dans tout ce qui précède, le rapport entre le nombre de spires de l'enroulement secondaire et le nombre de spires de l'enroulement primaire peut être compris entre 1 et 1,1. Une telle valeur de rapport de transformateur est notamment pertinente lorsque l'unité de stockage d'énergie électrique présente une tension nominale de 800V et lorsque le convertisseur de tension DC/DC est de type CLLC.

En variante, le rapport entre le nombre de spires de l'enroulement secondaire et le nombre de spires de l'enroulement primaire peut être compris entre 0,5 et 0,6. Une telle valeur de rapport de transformateur est notamment pertinente lorsque l'unité de stockage d'énergie électrique présente une tension nominale de 400V, de façon à adapter la tension en sortie d'un onduleur/redresseur en amont à cette valeur de tension nominale de 400V, et lorsque le convertisseur de tension DC/DC est de type CLLC.

Le nombre de spires peut être égal ou non d'une partie de l'enroulement primaire à l'autre.

Dans tout ce qui précède, chaque partie de l'enroulement primaire peut être divisé en couches empilées radialement. Le nombre de couches peut être égal entre les deux parties de l'enroulement primaire. Au sein d'une partie de l'enroulement primaire, les spires peuvent se succéder le long de l'axe longitudinal de la jambe centrale au sein d'une même couche puis, à l'extrémité axiale de la couche, les spires sont alors décalées radialement, se succédant axialement dans la couche suivante radialement parlant jusqu'à l'autre extrémité axiale de cette couche suivante, et ainsi de suite.

L'enroulement secondaire peut être divisé en couches empilées radialement. Similairement à ce qui a été exposé ci-dessus, au sein de l'enroulement secondaire, les spires peuvent se succéder le long de l'axe longitudinal de la jambe centrale au sein d'une même couche puis, à l'extrémité axiale de la couche, les spires sont alors décalées radialement, se succédant axialement dans la couche suivante radialement parlant jusqu'à l'autre extrémité axiale de cette couche suivante, et ainsi de suite.

Le nombre de couches empilées radialement de l'enroulement secondaire peut être égal au nombre de couches empilées radialement de chaque partie de l'enroulement primaire.

Dans tout ce qui précède, chacun de l'enroulement primaire et de l'enroulement secondaire peut être réalisé à l'aide d'un fil de Litz comprenant entre 1100 et 1400 brins, par exemple 1400 brins. Chaque brin a par exemple un diamètre compris entre 50µm et 100µm, par exemple 50µm ou 60µm ou 71µm.

On utilise par exemple pour l'enroulement primaire, respectivement secondaire, un unique fil de Litz avec le nombre de brins et le diamètre de brins précités.

En variante, seul l'enroulement secondaire est réalisé avec du fil de Litz comprenant entre 1100 et 1400 brins, chaque brin ayant un diamètre compris entre 50µm et 100µm. Une telle réalisation de l'enroulement secondaire avec ce type de fil de Litz est notamment appropriée pour un convertisseur de tension DC/DC 800V/400V.

L'emploi d'un tel fil de Litz peut permettre de réduire les pertes en courant alternatif et de réduire l'effet de proximité dans le transformateur, améliorant ainsi les performances du transformateur. Ces améliorations sont notamment permises par l'augmentation de la section de cuivre effective dans l'enroulement secondaire grâce à laquelle la densité de courant est augmentée.

Les enroulements primaire et secondaire peuvent être montés sur un support de bobine, lui-même monté sur la jambe centrale. De façon connue, une résine apte à être polymérisée (« potting » en anglais) pour durcir et immobiliser les éléments avec lesquels elle vient en contact peut être introduite entre la jambe centrale, le support de bobine et les enroulements électriques. La forme du support de bobine, par exemple via des ouvertures traversantes ménagées dans des zones libres d'enroulement électrique, peut être choisie pour favoriser la répartition de la résine, et donc améliorer le refroidissement du transformateur.

Le choix du matériau de la jambe centrale, tel que de la ferrite MnZn, et le positionnement des enroulements primaires et secondaires le long de la jambe centrale peuvent permettre de réduire l'effet de frange dans le transformateur.

Le transformateur peut permettre de transférer une puissance de l'ordre de 11kW.

L'invention a encore pour objet, selon un autre de ses aspects, un convertisseur de tension DC/DC, comprenant un transformateur tel que défini ci-dessus. Ce convertisseur de tension DC/DC est par exemple un convertisseur résonant. Ce convertisseur de tension DC/DC est par exemple de type 800V/800V ou 800V/400V.

L'invention a encore pour objet, selon un autre de ses aspects, un chargeur d'unité de stockage d'énergie électrique de véhicule, comprenant :
- un onduleur/redresseur apte à être connecté électriquement à un réseau de tension alternative, et
- le convertisseur de tension DC/DC tel que défini ci-dessus, ce convertisseur de tension DC/DC étant apte à être interposé électriquement entre l'onduleur/redresseur et l'unité de stockage d'énergie électrique. L'enroulement primaire peut alors être relié électriquement du côté de l'onduleur/redresseur et l'enroulement secondaire peut alors être relié du côté de l'unité de stockage d'énergie électrique.

L'onduleur/redresseur peut être commandé pour avoir sur sa sortie continue une tension de 800V et le convertisseur de tension DC/DC est alors configuré pour adapter cette valeur de tension en fonction de la valeur de la tension nominale de l'unité de stockage d'énergie électrique, cette dernière ayant par exemple la valeur de 400V ou 800V, comme déjà mentionné. Ainsi, selon que l'unité de stockage d'énergie électrique a une tension nominale dont la valeur est de 400V ou 800V, on choisit le rapport de transformateur pour adapter la tension de 800V sur la sortie continue de l'onduleur/redresseur à cette valeur de 400V ou 800V.

L'onduleur/redresseur peut réaliser une fonction de correction de facteur de puissance (« Power factor correction » en anglais). Une telle correction permet de façon connue que le courant prélevé sur le réseau soit le plus proche d'un sinus parfait à la pulsation du réseau. On réduit ainsi le courant réactif et les sous-harmoniques qui augmentent les pertes énergétiques en conduction

Le chargeur est par exemple réversible, permettant alternativement :
- la charge de l'unité de stockage d'énergie électrique depuis le réseau électrique, et
- l'alimentation électrique d'une charge ou du réseau électrique depuis l'unité de stockage d'énergie électrique.

Dans tout ce qui précède, la tension du réseau électrique peut être polyphasée, notamment triphasée. Cette tension peut présenter une fréquence de 50 Hz ou 60 Hz et une valeur efficace de 230V ou 240V. En variante, la tension du réseau peut être monophasée.

Le cas échéant, le chargeur peut comprendre un dispositif de détection d'un défaut d'isolement entre l'un au moins :
- d'une phase de la tension alternative et la terre, et
- du neutre de la tension alternative et la terre,
un tel dispositif de détection est par exemple réalisé selon l'enseignement de la demande WO2024199839 ou selon l'enseignement de la demande EP4434795.

En variante encore, le réseau peut fournir une tension continue. Dans ce cas, le chargeur est dépourvu d'onduleur/redresseur en amont du convertisseur de tension DC/DC.

Le chargeur peut, on non, être contenu dans un boîtier recevant également un autre convertisseur de tension DC/DC permettant de convertir la tension de l'unité de stockage d'énergie électrique en la tension du réseau de bord, cet autre convertisseur de tension DC/DC assurant par exemple une conversion :
- 800V/12V
- 800V/48V
- 400V/12V, ou
- 400V/48V

L'invention pourra être mieux comprise à la lecture de la description qui va suivre d'exemples non limitatifs de mise en œuvre de celle-ci :
- [Fig.1] représente un chargeur assurant l'alimentation électrique d'une unité de stockage d'énergie électrique de véhicule,
- [Fig.2] représente une vue schématique d'un transformateur selon un exemple de mise en œuvre de l'invention faisant partie du chargeur de la figure 1,
- [Fig.3] est une vue en coupe axiale du transformateur de la figure 2, et,
- [Fig.4] est un circuit électrique modélisant le transformateur des figures 2 et 3.

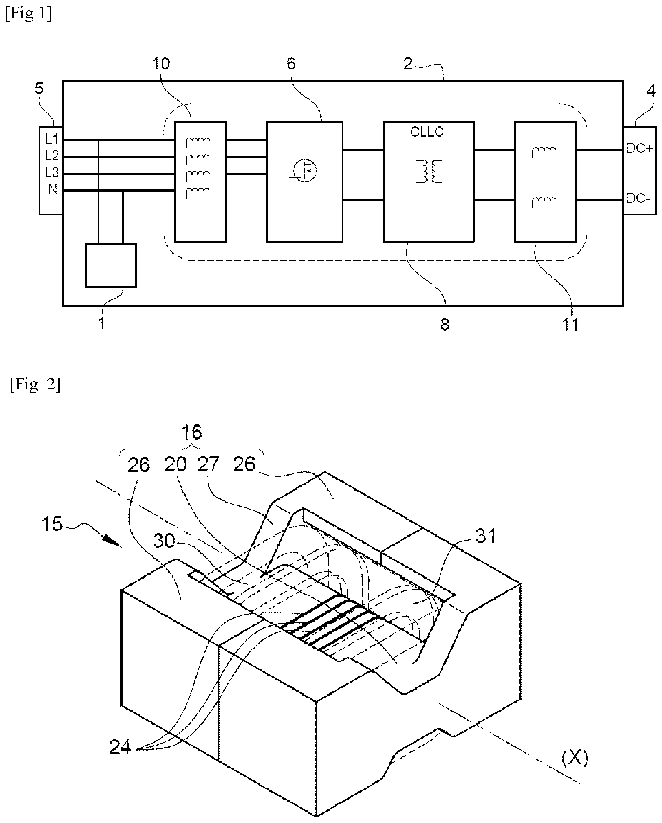

On a représenté sur la figure 1 un chargeur 2 d'une unité de stockage d'énergie électrique 4 de véhicule. Ce chargeur 2 comprend :
- un connecteur 5 apte à être branché à un réseau électrique fournissant une tension alternative dans l'exemple considéré,
- un onduleur/redresseur 6, et
- un convertisseur de tension DC/DC 8.

Comme on peut le voir sur la figure 1, l'onduleur/redresseur 6 est ici disposé en cascade entre le connecteur 5 et le convertisseur de tension DC/DC 8.

L'unité de stockage d'énergie électrique 4 est ici une batterie utilisée pour l'alimentation électrique d'une machine électrique de propulsion de véhicule. Cette batterie présente par exemple une tension nominale supérieure à 60V, notamment à 300V, notamment à 400V, notamment à 800V, voire à 1000V.

Le réseau électrique est par exemple un réseau triphasé véhiculant une tension à une première fréquence qui est de 50Hz ou 60Hz et dont la valeur efficace est de 230V ou 240V.

Comme représenté sur la figure 1, un étage de filtrage 10 du courant alternatif peut être prévu, cet étage de filtrage 10 étant ici disposé en série entre le connecteur 5 et l'onduleur/redresseur 6. Cet étage de filtrage 10 permet par exemple, lorsque la tension alternative est polyphasée, un filtrage du courant de mode commun et/ou un filtrage du courant différentiel.

Le cas échéant, de manière facultative, un autre étage de filtrage 11 du courant continu peut être présent, étant alors disposé en série entre le convertisseur de tension DC/DC 8 et l'unité de stockage d'énergie électrique 4, comme représenté sur la figure 1.

Le convertisseur de tension DC/DC 8 est par exemple un convertisseur résonant, par exemple de type CLLC ou CLLLC ou LLC.

Le convertisseur de tension DC/DC 8 comprend un transformateur monophasé 15 permettant l'établissement d'une isolation galvanique au sein du chargeur 2 et l'adaptation du gain en tension du convertisseur.

Comme on peut le voir sur les figures 2 à 4, le transformateur 15 comprend :
- un circuit magnétique 16,
- un enroulement primaire 17, et
- un enroulement secondaire 18.

Le circuit magnétique 16 comprend dans l'exemple considéré une jambe centrale 20 autour de laquelle sont successivement enroulés l'enroulement secondaire 18 et des parties successives 17a, 17b de l'enroulement primaire 17. Les parties 17a et 17b de l'enroulement primaire 17 sont montées en série dans l'exemple considéré.

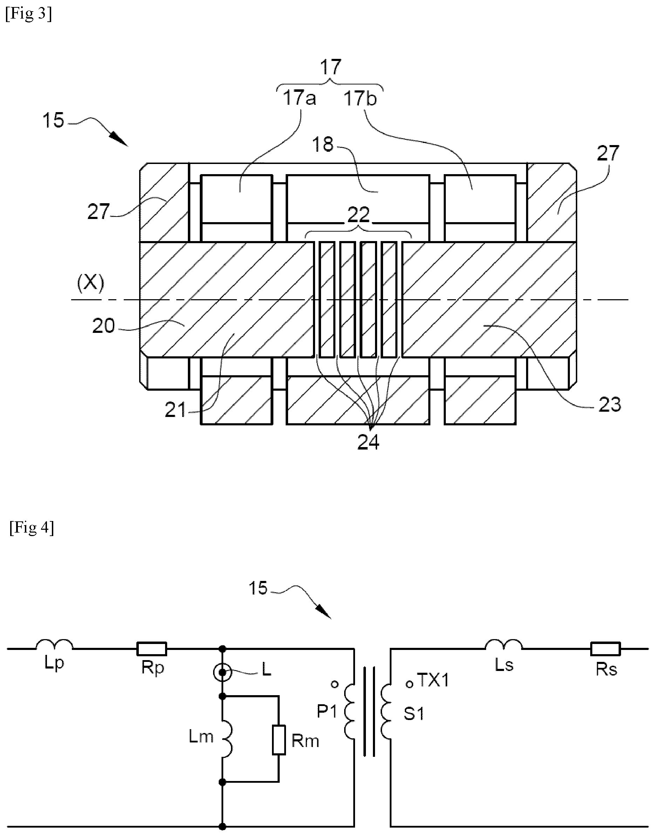

Comme on peut le voir sur la figure 3, la jambe centrale 20 comprend successivement le long de son axe longitudinal (X):
- une première portion 21 autour de laquelle est enroulée une première partie 17a de l'enroulement primaire 17,
- une deuxième portion 22 autour de laquelle est enroulé l'enroulement secondaire 18, et
- une troisième portion 23 autour de laquelle est enroulée une deuxième partie 17b de l'enroulement primaire 17.

On constate également sur la figure 3 que plusieurs entrefers 24 sont ménagés dans la deuxième portion 22 de la jambe centrale 20. Tous les entrefers 24 sont dans l'exemple des figures 2 et 3 radialement entourés par l'enroulement secondaire 18.

Dans l'exemple de la figure 3, 5 entrefers 24 sont ménagés dans la deuxième portion 22 de la jambe centrale 20, mais l'invention n'est pas limitée à un tel nombre.

On constate aussi sur la figure 3 que tous les entrefers 24 sont identiques, étant chacun occupé par de l'air ou du FR4 et s'étendant sur la même dimension le long de l'axe longitudinal (X) de la jambe centrale 20. On constate aussi sur la figure 3 que la distance le long de cet axe longitudinal (X) qui sépare deux entrefers consécutifs reste constante sur l'ensemble des entrefers 24 ménagés dans la deuxième portion 22 de la jambe centrale 20. Toujours dans l'exemple considéré, la jambe centrale 20 est dépourvue d'entrefer ailleurs que dans la deuxième portion 22.

Dans tout ce qui précède, la jambe centrale 20 présente par exemple une section transversale ovale.

Comme on peut le voir sur la figure 2, le circuit magnétique 16 du transformateur 15 comprend encore dans l'exemple considéré :
- deux jambes externes 26 entre lesquelles est disposée physiquement la jambe centrale 20, et
- deux culasses 27, chaque culasse 27 étant disposée à une extrémité longitudinale selon l'axe (X) et permettant au flux magnétique circulant dans la jambe centrale 20 de reboucler dans les jambes externes 26.

Comme on peut le voir sur la figure 2, chaque culasse 27 peut présenter des découpes au niveau de la jonction avec la jambe centrale afin de réduire la section du circuit magnétique au niveau de cette jonction.

Dans l'exemple de la figure 2, chaque culasse 27 est réalisée d'une seule pièce avec une partie de la jambe centrale 20 et de chaque jambe externe 26, de sorte que le circuit magnétique 16 comprend deux pièces en forme de « E ». On constate sur la figure 2 que le circuit magnétique 16 encapsule l'enroulement primaire 17 et l'enroulement secondaire 18, formant une sorte de coque pour le transformateur 15. Cette coque présente par exemple les dimensions suivantes :
- longueur selon l'axe longitudinal (X) : 61 mm,
- largeur dans un plan perpendiculaire à l'axe (X) : 66 mm,
- hauteur dans un plan perpendiculaire à l'axe (X) : 31,1 mm.

Toutes ces dimensions du circuit magnétique 16 peuvent ainsi être inférieures à 10 cm.

Le circuit magnétique 16 est par exemple réalisé en ferrite.

Comme on le voit sur la figure 2, le transformateur 15 peut comprendre un support de bobine 30, par exemple en plastique, qui est interposé entre les différents enroulements 17, 18 et la jambe centrale 20. Ce support de bobine 30 comprend plusieurs rebords 31 se succédant le long de l'axe longitudinal (X) et séparant deux-à-deux des parties de l'enroulement primaire 17 et l'enroulement secondaire 18.

Une résine apte à être polymérisée (« potting » en anglais) pour durcir et immobiliser les éléments avec lesquels elle vient en contact peut occuper tout ou partie de l'espace existant à l'intérieur du circuit magnétique 16 pour venir s'interposer entre la jambe centrale 20, le support de bobine 30 et les enroulements primaires 17 et 18.

Dans l'exemple considéré, chaque partie 17a, 17b de l'enroulement primaire 17 peut être divisée en couches empilées radialement. Le nombre de couches peut être égal entre les deux parties 17a, 17b de l'enroulement primaire. Il y a par exemple trois couches de conducteur électrique empilées radialement. Les spires de chaque partie 17a, 17b de l'enroulement primaire peuvent être réparties comme suit, de façon identique entre les parties 17a, 17b :
- au sein de la couche radialement intérieure, les spires se succèdent le long de l'axe longitudinal (X) d'une extrémité axiale à l'autre de cette couche puis,
- à l'extrémité axiale de cette couche, les spires passent dans la couche suivante radialement parlant et se succèdent axialement dans cette couche suivante jusqu'à l'autre extrémité axiale, et ainsi de suite.

Similairement à ce qui vient d'être décrit, l'enroulement secondaire 18 peut être divisé en couches empilées radialement, par exemple en trois couches empilées radialement, c'est-à-dire le même nombre de couches qu'au sein des parties de l'enroulement primaire 17. Les spires peuvent aussi se succéder le long de l'axe longitudinal (X) au sein de la couche radialement intérieure puis, à l'extrémité axiale de cette couche, les spires peuvent passer dans la couche suivante radialement parlant jusqu'à l'autre extrémité axiale de cette couche suivante, et ainsi de suite.

Dans une première application, le convertisseur de tension DC/DC 8 convertit une tension de 800V sur la sortie continue de l'onduleur/redresseur 6 en une tension de 400V qui correspond à la tension nominale de l'unité de stockage d'énergie électrique 4. Dans cette application, le rapport entre le nombre de spires de l'enroulement secondaire 18 et le nombre de spires de l'enroulement primaire 17 peut être compris entre 0,5 et 0,6. L'enroulement secondaire 18 présente par exemple 13 spires, tandis que la première partie 17a de l'enroulement primaire 17 présente 12 spires et la deuxième partie 17b de l'enroulement primaire présente 13 spires. On a ainsi un rapport de transformateur 13/25. L'enroulement secondaire 18 est par exemple réalisé à l'aide d'un fil de Litz de 1400 brins avec un diamètre de 50µm pour chaque brin. L'enroulement primaire 17 est ici réalisé avec du fil de Litz dont le nombre de brins et le diamètre de brin est différent.

Le transformateur 15 tel que dimensionné ci-dessus pour l'application 800V/400V correspond par exemple au schéma électrique selon la figure 4 avec :
- une inductance magnétisante Lm égale à 105µH,
- une inductance de fuite au primaire Lp égale à 32µH,
- une inductance de fuite au secondaire Ls égale à 0.3µH.

Dans une deuxième application, le convertisseur de tension DC/DC 8 convertit une tension de 800V sur la sortie continue de l'onduleur/redresseur 6 en une tension de 800V qui correspond à la tension nominale de l'unité de stockage d'énergie électrique 4. Dans cette application, le rapport entre le nombre de spires de l'enroulement secondaire 18 et le nombre de spires de l'enroulement primaire 17 peut être compris entre 1 et 1,1. L'enroulement secondaire 18 présente par exemple 26 spires, tandis que la première partie 17a de l'enroulement primaire 17 présente 12 spires et la deuxième partie 17b de l'enroulement primaire présente 13 spires. On a ainsi un rapport de transformateur 26/25. L'enroulement secondaire 18 est par exemple réalisé à l'aide d'un fil de Litz dont le nombre de brins et le diamètre de brin peut être différent de celui décrit en référence à la première application.

Le transformateur 15 tel que dimensionné ci-dessus pour l'application 800V/800V correspond par exemple au schéma électrique selon la figure 4 avec :
- une inductance magnétisante Lm égale à 105µH,
- une inductance de fuite au primaire Lp égale à 32µH,
- une inductance de fuite au secondaire Ls égale à 0.3µH

L'invention n'est pas limitée à l'exemple qui vient d'être décrit.

Dans une variante, la tension alternative du réseau est monophasée.

Dans une autre variante, la tension du réseau électrique est continue.

## Revendications

1. Transformateur monophasé (15) pour convertisseur de tension (8), comprenant :
- un circuit magnétique (16),
- un enroulement primaire (17), et
- un enroulement secondaire (18),
le circuit magnétique (16) comprenant une jambe centrale (20) autour de laquelle sont successivement enroulés l'enroulement secondaire (18) et des parties successives (17a, 17b) de l'enroulement primaire (17), la jambe centrale (20) comprenant successivement le long de son axe longitudinal (X):
- une première portion (21) autour de laquelle est enroulée une première partie (17a) de l'enroulement primaire (17),
- une deuxième portion (22) autour de laquelle est enroulé l'enroulement secondaire (18), et
- une troisième portion (23) autour de laquelle est enroulée une deuxième partie (17b) de l'enroulement primaire (17),
plusieurs entrefers (24) étant ménagés dans la deuxième portion (22) de la jambe centrale (20).

2. Transformateur selon la revendication 1, un nombre impair d'entrefers (24) étant ménagé dans la deuxième portion (22) de la jambe centrale (20), notamment trois ou cinq entrefers.

3. Transformateur selon la revendication 1 ou 2, chaque entrefer (24) s'étendant sur la même dimension le long de l'axe longitudinal (X) de la jambe centrale (20).

4. Transformateur selon l'une quelconque des revendications précédentes, la distance le long de l'axe longitudinal (X) de la jambe centrale (20) séparant deux entrefers (24) consécutifs étant constante sur l'ensemble des entrefers (24) ménagés dans la deuxième portion (22) de la jambe centrale (20).

5. Transformateur selon l'une quelconque des revendications précédentes, la jambe centrale (20) étant dépourvue d'entrefer ailleurs que dans la deuxième portion (22).

6. Transformateur selon l'une quelconque des revendications précédentes, le rapport entre le nombre de spires de l'enroulement secondaire (18) et le nombre de spires de l'enroulement primaire (17) étant compris entre 1 et 1,1.

7. Transformateur selon l'une quelconque des revendications 1 à 5, le rapport entre le nombre de spires de l'enroulement secondaire (18) et le nombre de spires de l'enroulement primaire (17) étant compris entre 0,5 et 0,6.

8. Transformateur selon l'une quelconque des revendications précédentes, chaque partie (17a, 17b) de l'enroulement primaire (17) étant divisé en couches empilées radialement, et le nombre de couches étant égal entre les deux parties (17a, 17b) de l'enroulement primaire.

9. Transformateur selon l'une quelconque des revendications précédentes, l'enroulement secondaire (18) étant divisé en couches empilées radialement.

10. Transformateur selon les revendications 8 et 9, le nombre de couches empilées radialement de l'enroulement secondaire (18) étant égal au nombre de couches empilées radialement des parties (17a, 17b) de l'enroulement primaire (17).

11. Convertisseur de tension DC/DC (8), comprenant un transformateur (15) selon l'une quelconque des revendications précédentes, le convertisseur étant notamment résonant.

12. Chargeur (2) d'une unité stockage d'énergie électrique de véhicule (4), comprenant :
- un onduleur/redresseur (6) apte à être connecté électriquement à un réseau de tension alternative, et
- le convertisseur de tension DC/DC (8) selon la revendication 11, ce convertisseur de tension DC/DC (8) étant apte à être interposé électriquement entre l'onduleur/redresseur (6) et l'unité de stockage d'énergie électrique (4).
